Europäisches Patentamt

**European Patent Office**

**Office européen des brevets**

(19)

(11) Numéro de publication: **0 050 547**
A1

# (12) DEMANDE DE BREVET EUROPEEN

(21) Numéro de dépôt: **81401546.7**

(22) Date de dépôt: **06.10.81**

(51) Int. Cl.³: **H 01 B 7/08,** H 02 G 5/00

(30) Priorité: **17.10.80 FR 8022276**

(43) Date de publication de la demande: **28.04.82
Bulletin 82/17**

(84) Etats contractants désignés: **DE GB IT NL SE**

(71) Demandeur: **THOMSON-CSF, 173, Boulevard
Haussmann, F-75360 Paris Cedex 08 (FR)**

(72) Inventeur: **Chesnel, André, THOMSON-CSF
SCPI 173, bld Haussmann, F-75360 Paris Cedex 08 (FR)**

(74) Mandataire: **Eisenbeth, Jacques Pierre et al,
"THOMSON-CSF" - SCPI 173, bld Haussmann,
F-75360 Paris Cedex 08 (FR)**

(54) **Liaison conductrice destinée au transport d'impulsions de forte puissance et son procédé de fabrication.**

(57) Une liaison suivant l'invention comporte un empilement de feuilles conductrices (31) et de feuilles isolantes
(21) dont certaines au moins sont de largeur supérieure à
celle des feuilles conductrices, les feuilles extérieures (21')
de l'empilement étant isolantes. Les bords des feuilles isolantes (21) qui dépassent des feuilles conductrices (31) sont
solidarisées les unes aux autres (en 26).

Un procédé de fabrication d'une liaison selon l'invention comporte les étapes de réaliser un empilement de
feuilles conductrices et de feuilles isolantes dont certaines
au moins sont de largeur supérieure à celle des feuilles
conductrices, les feuilles extérieures de l'empilement étant
isolantes, et de solidariser les bords des feuilles isolantes
qui dépassent des feuilles conductrices.

EP 0 050 547 A1

1

# LIAISON CONDUCTRICE DESTINEE AU TRANSPORT D'IMPULSIONS DE FORTE PUISSANCE ET SON PROCEDE DE FABRICATION

La présente invention a pour objet une liaison conductrice destinée au transport d'impulsions de forte puissance et son procédé de fabrication.

On utilise couramment pour produire les hyperfréquences un modulateur qui délivre des impulsions de puissance qui sont ensuite injectées dans un transformateur d'impulsions attaquant un tube hyperfréquence par l'intermédiaire d'une liaison dont la longueur est par exemple de 1 à 3 m. Dans le cas où les puissances en jeu sont relativement peu élevées, et les impulsions relativement longues (10 à 100 micro-secondes), le transport des impulsions entre le modulateur et le transformateur d'impulsions peut être réalisé à l'aide d'une simple barre de cuivre. Dans les cas où les impulsions sont courtes, et d'autant plus que l'impédance est faible, il est indispensable de minimiser la self parasite de la liaison, ce qui justifie la nécessité de recourir à une structure coaxiale de la liaison.

L'évolution technologique vers de plus fortes puissances et des impédances plus faibles rend difficile la réalisation d'une liaison coaxiale. On est conduit à utiliser pour chaque liaison plusieurs câbles coaxiaux montés en parallèle. Une telle liaison est coûteuse à réaliser et l'adaptation n'est qu'approximativement réalisée. De plus, une telle liaison ne convient pas pour des puissances très élevées.

Il est connu de l'art antérieur, par exemple du brevet français 2 138 403 publié le 5 janvier 1973, une ligne de transmission à très faible impédance caractéristique destinée à l'alimentation des circuits intégrés, et consistant en une double structure où une lame de faible résistivité, par exemple une lame de céramique à base de titanate alcalino-terreux, est traitée par réduction chimique afin de diminuer fortement sa résistivité, et est ensuite entourée de deux couches isolantes, par exemple obtenues par réoxydation de la surface de la lame, sur lesquelles sont déposées, deux métallisations, par exemple par sérigraphie.

Une telle liaison qui est destinée à absorber les impulsions ne convient pas à la transmission de fortes puissances sous faible impédance étant donné que seules des épaisseurs de métallisation faibles sont réalisables dans des limites raisonnable de coût. D'autre part, les matériaux employés dans ce genre de technique sont fragiles et ne conviennent pas à la réalisation de liaisons sous forme de câbles entre deux modules séparés dans l'espace.

La présente invention concerne donc une liaison conductrice à faible impédance caractéristique, facile à fabriquer et convenant particulièrement à des liaisons sous forme de câbles destinés à la transmission d'impulsions de forte puissance.

Une liaison conductrice selon l'invention est constituée par un empilement de feuilles conductrices de feuilles isolantes dont les feuilles extérieures sont isolantes, au moins les feuilles isolantes extérieures étant de largeur supérieure à celle des feuilles conductrices.Les bords des feuilles isolantes qui dépassent des feuilles conductrices étant solidarisés les uns aux autres.

Les feuilles conductrices adjacentes à une même feuille conductrice sont de préférence reliées électriquement.

L'invention concerne également une liaison conductrice multiple ou plusieurs liaisons élémentaires sont réunies sur une partie de leur parcours pour constituer une liaison unique de largeur supérieure.

Un procédé de fabrication d'une liaison selon l'invention comporte une étape où l'on réalise un empilement de feuilles conductrices et de feuilles isolantes dont certaines au moins sont de largeur supérieure à celles des feuilles conductrices et dont les feuilles extérieures sont isolantes et une étape où l'on solidarise les bords des feuilles isolantes qui dépassent des feuilles conductrices.

L'invention sera mieux comprise à la lecture de la description ci-dessous par référence aux dessins annexés et où :

- la figure 1 représente une liaison coaxiale selon l'art antérieur ;

- les figures 2 et 3 représentent des coupes transversales d'une liaison selon deux modes de réalisation de l'invention ;

- la figure 4 représente un premier mode de réalisation d'une liaison conductrice multiple selon l'invention ;

- la figure 5 représente une perspective des feuilles conductrices espacées ;

- la figure 6 représente un second mode de réalisation d'une liaison conductrice multiple selon l'invention ;

- la figure 7 représente une liaison selon l'invention après une opération où les feuilles isolantes sont liées entre elles ;

- les figures 8 et 9 représentent des illustrations des procédés de fabrication d'une liaison selon l'invention ;

- la figure 10 représente une variante d'une liaison selon l'invention.

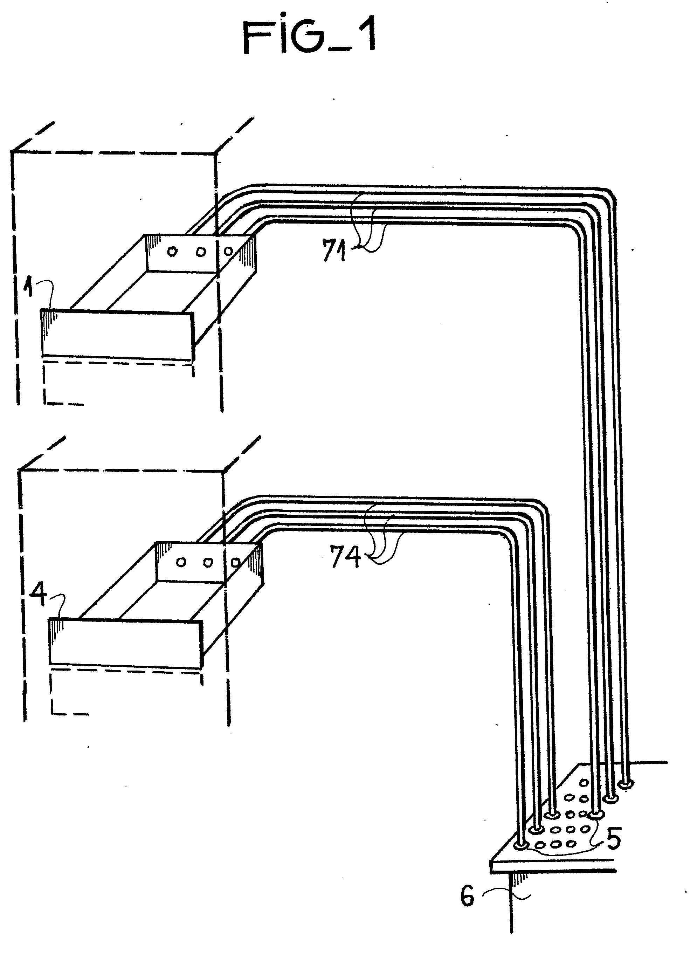

La figure 1 représente, à titre d'exemple illustratif de l'art antérieur, un groupe de 4 modules, référencés 1 à 4, de modulateurs d'impulsions qui doivent être reliés à un transformateur d'impulsions 6 pourvu de bornes 5, par des liaisons 71 à 74 ne détériorant pas les impulsions produites. Dans le cas de puissances élevées, par exemple 1,5 MW, correspondant à une intensité de 50 A en sortie des modulateurs d'impulsions, et pour une impédance de $0,8\,\Omega$, on est conduit à utiliser comme représenté, trois câbles coaxiaux par liaison, ce qui revient à mettre en oeuvre douze câbles coaxiaux reliés au transformateur d'impédance 6. Une telle liaison est coûteuse, délicate et présente des complications mécaniques importantes. En outre, l'adaptation n'est qu'approximativement réalisée, défaut d'autant plus important que l'impédance est plus faible.

Dans le cas de puissances plus importantes, une liaison par câbles coaxiaux ne peut plus être réalisée.

Selon l'invention, on utilise une liaison conductrice constituée par des feuilles conductrices, à savoir des conducteurs plats, 20 ou 30 sur les figures, espacés par des feuilles isolantes dont certaines au moins ont une largeur supérieure à celle des feuilles conductrices.

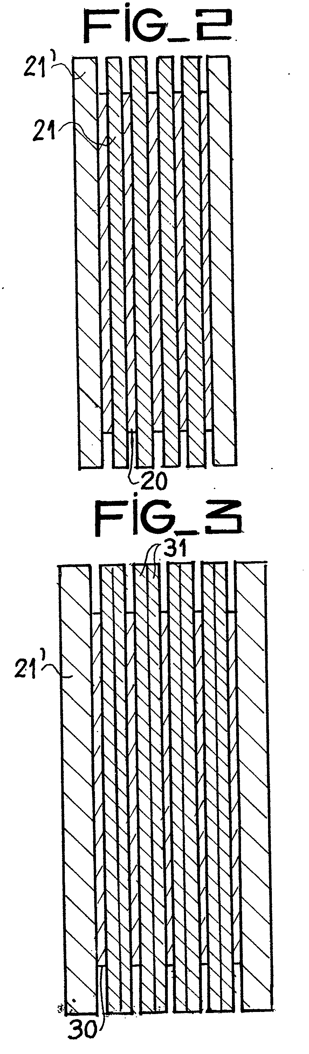

La figure 2 montre en coupe transversale une telle liaison qui est réalisée sous forme d'un empilement ou sandwich de conducteurs plats 20 (ici 5) espacés par des feuilles isolantes 21. Les feuilles isolantes 21' disposées aux extrémités ne jouent pas de rôle dans la définition des caractéristiques de la liaison. Par conséquent, elles peuvent être en tout matériau isolant susceptible de former une gaine par exemple en papier et être d'épaisseur et/ou de largeur différente. Dans la variante de la figure 3, les conducteurs plats 30 sont espacés chacun par deux feuilles isolantes 31. Dans tous les cas, une feuille isolante 21' est disposée aux deux extrémités d'empilement. On peut utiliser pour les conducteurs plats un matériau bon conducteur comme le cuivre, et pour les feuilles isolantes un bon isolant comme par exemple le polytétrafluoréthylène (PTFE). D'autres matériaux isolants tels que le polycarbonate, le polyéthylène, le polyester, le polystyrène, ou bien encore le polytéréphtalate d'éthylène (connu sous la marque "Mylar" conviennent également. Lorsqu'on veut réaliser une liaison souple, on peut utiliser un conducteur souple en bronze au beryllium dont la résistivité un peu plus forte que celle du cuivre ne constitue en pratique qu'un inconvénient mineur.

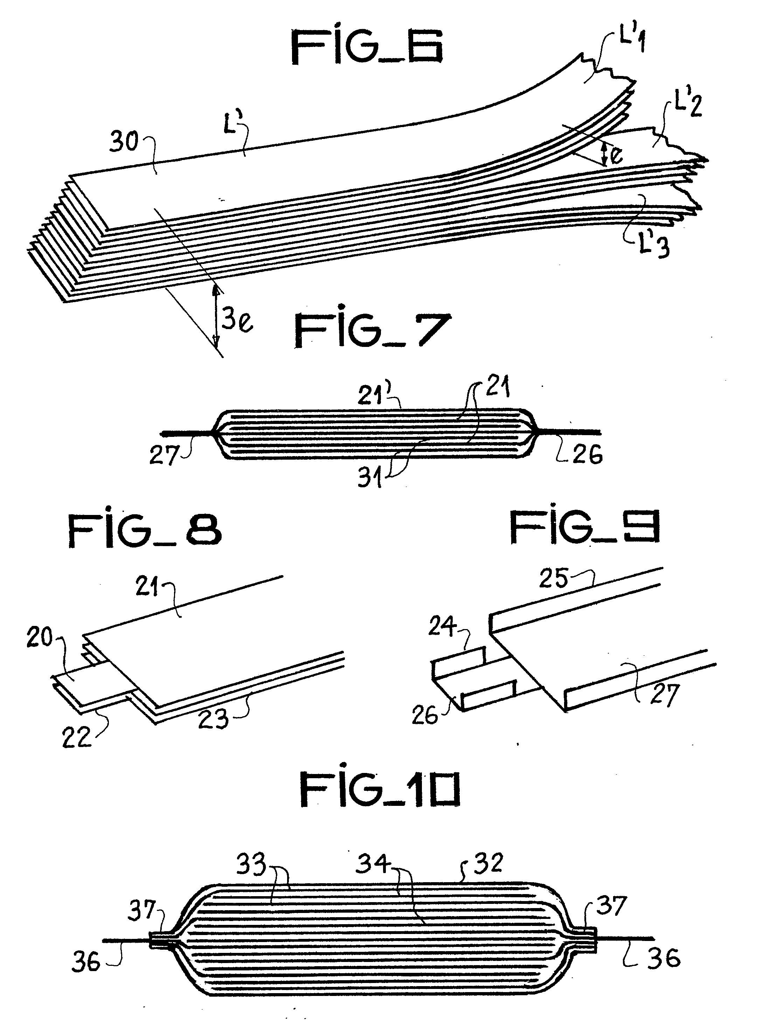

On fait dépasser les feuilles isolantes latéralement, ce qui permet notamment d'éviter des court-circuits sur les conducteurs adjacents comme représenté sur les figures 2 et 3. Les feuilles isolantes sont liées les unes aux autres par collage, soudage, agrafage, etc... ce qui permet de maintenir en place les éléments conducteurs tout en gainant également la liaison qui pourra aussi être utilisée come un câble. Ceci est représenté à la figure 7 où les feuilles isolantes 21 et 21' sont liées entre elles en 26 par leurs bords qui dépassent des feuilles conductrices 31 qui sont ainsi maintenues latéralement en position. Ceci permet également de maintenir le contact mécanique des différentes couches de feuilles entre elles lors du maniement de la liaison.

On va maintenant indiquer comment déterminer les paramètres d'une liaison selon l'invention avec une impédance adaptée.

5

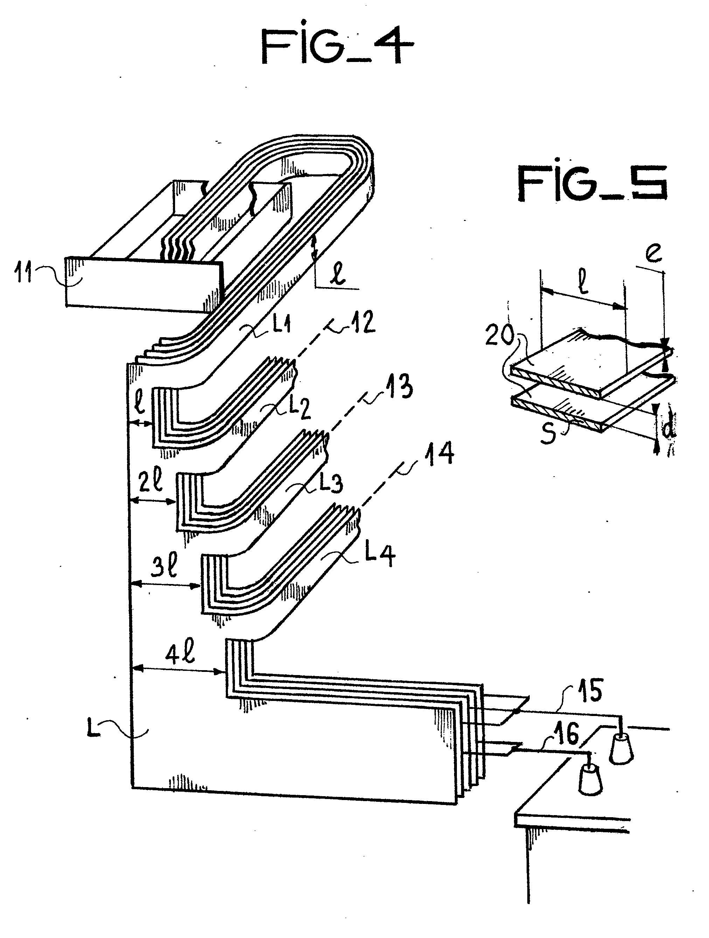

Par référence à la figure 5, un conducteur plat 20 ou 30 a une largeur l, une épaisseur e et une surface transversale S et deux conducteurs sont séparés par une distance d. L'impédance caractéristique Z d'une telle liaison à deux conducteurs selon l'invention est alors données par la formule :

$$(1) \quad Z_c = 120\pi \frac{d}{l\sqrt{\mathcal{E}_r}}$$

où $\mathcal{E}_r$ est la permittivité relative de l'isolant disposé entre les liaisons conductrices.

Pour l'air $\mathcal{E}_r = 1$ ; pour le PTFE $\mathcal{E}_r = 2,2$.

En pratique, l'impédance caractéristique est imposée par les caractéristiques du modulateur d'impulsions utilisé.

Une autre contrainte est la densité de courant D admissible dans les feuilles conductrices formant des conducteurs plats. Pour le cuivre, on prendra :

$$D = 3,5 \, A/mm^2;$$

avec $D = \frac{I}{s}$ où I est le courant de sortie du modulateur et s la section du conducteur.

Une contrainte également à prendre en compte est la profondeur de pénétration p (effet de peau) puisqu'on travaille en haute fréquence. On choisira en pratique une épaisseur e égale à deux fois la profondeur de pénétration p.

La largeur minimale lmin du conducteur plat sera alors donnée par la formule :

$$(2) \quad l_{min} = \frac{s}{e} = \frac{I}{2DP}$$

D'autre part, la formule (1) nous donne l

$$(3) \quad l = \frac{120\pi}{Z_c} \quad \frac{d}{\sqrt{\mathcal{E}_r}}$$

La condition de fonctionnement sera

$$l \geqslant l_{min} \quad soit \quad \frac{120\pi}{Z_c} \frac{d}{\sqrt{\mathcal{E}_r}} \geqslant \frac{I}{2Dp}$$

$Z_c$, et I, p sont imposés par les caractéristiques du modulateur.

D est déterminé par le matériau du conducteur plat.

On pourra donc exprimer la condition sous la forme

$$(4) \quad d \gg \frac{Z_c I \sqrt{\varepsilon r}}{240 \pi p D}$$

Application numérique :

Pour des impulsions de 2,4 microsecondes, p = 0,15 mm

$$I = 50 \text{ A}$$

$$Z_c = 0,8 \, \Omega$$

$$D \; 3,5 \text{ A/mm}^2 \text{ (conducteurs en Cu)}$$

$$\varepsilon_r = 2,2 \text{ (PTFE)}$$

La condition (4) s'exprime alors :

$$d \gg \frac{0,8 \times 50 \times \sqrt{2,2}}{240 \times \pi \times 0,15 \times 3,5} \simeq 0,15 \text{ mm}$$

En pratique, en prenant deux feuilles de PTFE de 0,25 mm d'épaisseur, on aura en utilisant la formule (3):

$$l = \frac{120 \pi}{0,8} \quad \frac{0,5}{\sqrt{2,2}} = 160 \text{ mm}$$

ce qui laisse une marge de sécurité par rapport à la largeur minimale donnée par la formule (2) :

$$l_{min} = \frac{I}{2Dp} = \frac{50}{2 \times 3,5 \times 0,15} = 48 \text{ mm}$$

Comme une largeur de 160 mm représente un encombrement substantiel, on pourra choisir une disposition comme représenté à la figure 3, c'est-à-dire un sandwich de 5 feuilles de cuivre de 40 mm de large et de 2 x 4 feuilles de PTFE, ce qui représente une épaisseur totale de 3,5 mm environ.

En général, le nombre de feuilles du sandwich sera déterminé en fonction des contraintes d'encombrement.

La figure 4 représente schématiquement une liaison multiple selon l'invention où différents tronçons $L_1$, $L_2$, $L_3$ et $L_4$ de largeur l provenant de modules 11 à 14 tels que décrits ci-dessus se prolongeant de manière à former des raccordements, de largeur 2l lorsque le tronçon $L_2$ se raccorde au tronçon $L_1$, de largeur 3l, lorsque le tronçon $L_3$ se raccorde aux tronçons $L_1$ et $L_2$, et de

largeur 41 lorsque le tronçon $L_3$ se raccorde aux tronçons $L_1$, $L_2$ et $L_3$, ce qui donne en fin de compte une liaison L de largeur 41 connectée aux bornes 15 et 16 d'un dispositif d'utilisation.

La figure 6 est une variante du schéma de la figure 4 où différents tronçons $L'_1$, $L'_2$ et $L'_3$ d'épaisseur e se raccordent de manière à former un tronçon unique L' d'épaisseur 3e. Ce mode de réalisation permettent de réaliser des raccordements tout en maintenant les caractéristiques de la liaison.

Le procédé de fabrication d'une liaison selon l'invention comporte les étapes de réaliser un empilement de feuilles conductrices et de feuilles isolantes dont les feuilles extérieures sont isolantes, par exemple à partir d'autant de dévidoirs qu'il y a de feuilles et de lier les bords des feuilles isolantes qui dépassent des feuilles conductrices par des techniques connues en elles-même à savoir le collage, le soudage, l'agrafage etc...

Selon un mode particulier de réalisation, les feuilles conductrices et les feuilles isolantes sont fournies suivant des longueurs prédéterminées, les feuilles conductrices étant de préférence plus longues que les feuilles isolantes. Cette dernière caractéristique a notamment pour avantage de permettre un positionnement aisé des différentes feuilles. Ceci apparaîtra aux figures 8 et 9 où les bords latéraux 23 des feuilles isolantes 21 sont susceptibles d'être guidés par des rebords tels que 25 de moyens de guidage 27 et les bords 22 des feuilles conductrices 20 dépassant longitudinalement des feuilles 21 sont susceptibles d'ête guidées par des rebords tels que 24 de moyens de guidage 26.

Dans le cas particulier de la figure 6, les feuilles isolantes qui dépassent latéralement des feuilles conductrices sont divisées sur au moins une partie de leur longueur en autant de groupes que la liaison multiple comporte de liaisons élémentaires et les bords des feuilles isolantes de chaque groupe sont ensuite rendus solidaires les uns des autres. Il est avantageux de séparer les feuilles conductrices par deux feuilles isolantes, au moins aux interfaces entre les groupes, ce qui permet d'affecter chacune des deux feuilles à un groupe.

8

L'invention ne se limite pas au mode de réalisation décrit ci-dessus. Par exemple, les feuilles conductrices peuvent être également revêtues d'une couche isolante par exemple un émaillage, ce qui permet notamment d'éviter des court-circuits au niveau des sorties.

Un variante de l'invention est représentée à la figure 10 où seules les feuilles isolantes extérieures 32 sont plus larges que les feuilles conductrices. Les feuilles conductrices 33, sont plus larges que les feuilles isolantes 34 qui les séparent, et elles sont décalées latéralement par rapport à celles-ci, alternativement d'un côté et de l'autre. Les feuilles 33 soudées entre elles 37 au niveau de leurs bords qui dépassent des feuilles isolantes 34, ou bien collées à ce niveau à l'aide d'une colle conductrice. Les feuilles isolantes 32 sont solidaires entre elles au niveau de leurs bornes en 37. Leurs bords se prolongent éventuellement en 36 et sont également solidaires à ce niveau.

9

## REVENDICATIONS

1. Liaison conductrice destinée au transport d'impulsions de forte puissance, caractérisée en ce qu'elle est constituée par un empilement de feuilles conductrices et de feuilles isolantes dont les feuilles extérieures sont isolantes, au moins les feuilles isolantes extérieures étant de largeur supérieure à celle des feuilles conductrices, et en ce que les bords des feuilles isolantes qui dépassent des feuilles sont solidarisés les uns aux autres.

2. Liaison conductrice selon l'une des revendications 1 ou 2, caractérisée en ce que les feuilles conductrices adjacentes à une même feuille conductrice sont reliées électriquement.

3. Liaison conductrice selon l'une des revendications 1 ou 2, caractérisée en ce que les feuilles conductrices sont en cuivre ou en bronze au berylium.

4. Liaison conductrice selon l'une des revendications précédentes, caractérisée en ce que les feuilles isolantes sont en PTFE ou en polytéréphtalate d'éthylène.

5. Liaison conductrice multiple, caractérisée en ce que plusieurs liaisons élémentaires selon l'une des revendications précédentes sont réunies sur une partie de leur parcours pour constituer une liaison unique de largeur ou d'épaisseur supérieure.

6. Liaison conductrice selon la revendication 7, caractérisée en ce que ladite liaison unique a une largeur ou une épaisseur égale à la somme des largeurs des liaisons élémentaires.

7. Procédé de fabrication d'une liaison selon l'une des revendications précédentes, caractérisé en ce qu'il comporte les étapes de

- réaliser un empilement de feuilles conductrices et de feuilles isolantes dont certaines au moins sont de largeur supérieure à celles des feuilles conductrices, les feuilles extérieures du sandwich étant isolantes,

- solidariser les bords des feuilles isolantes qui dépassent des feuilles conductrices.

8. Procédé selon la revendication 7, caractérisé en ce qu'il comprend les étapes préliminaires de

- fournir des longueurs prédéterminées de feuilles conductrices,

- fournir des longueurs prédéterminées de feuilles isolantes.

9. Procédé selon la revendication 8, caractérisé en ce que les longueurs prédéterminées des feuilles conductrices sont supérieures à celles des feuilles isolantes, en ce que les feuilles isolantes sont guidées latéralement lors de leur amenée par des premiers moyens de positionnement espacés d'une largeur égale à celle des feuilles isolantes et en ce que les feuilles conductrices sont guidées latéralement par des seconds moyens de positionnement espacés d'une largeur égale à celle des feuilles conductrices encadrant lesdits premiers moyens et espacés d'une distance supérieure à la longueur prédéterminée des feuilles isolantes.

10. Procédé suivant l'une des revendication 7 à 9, caractérisé en ce que au moins deux feuilles conductrices sont séparées par deux feuilles isolantes.

11. Procédé suivant l'une des revendications 7 à 10, caractérisé en ce que l'étape de relier les bords des feuilles isolantes comporte les opérations suivantes :

- diviser les feuilles isolantes en plusieurs groupes sur au moins une partie de leur longueur,

- rendre solidaires entre elles les feuilles isolantes de chaque groupe.

0050547

# FIG_1

0050547

# FIG_2

21'

21

20

# FIG_3

31

21'

30

0050547

# FIG_4

# FIG_5

11

$\ell$

L1    12

$\ell$

L2    13

2$\ell$

L3    14

3$\ell$

L4

4$\ell$

L

15

16

$e$

$\ell$

20

$d$

S

**FIG_6**

**FIG_7**

**FIG_8**

**FIG_9**

**FIG_10**

Office européen
des brevets

**RAPPORT DE RECHERCHE EUROPEENNE**

00505047

Numéro de la demande

EP 81 40 1546

| Catégorie | Citation du document avec indication, en cas de besoin, des parties pertinentes | Revendication concernée |
|---|---|---|
| | US - A - 3 520 987 (OHLRICH)<br><br>* colonne 1, ligne 66 à colonne 3, ligne 37; figures 1 à 3 *<br><br>-- | 1-3,7 |
| | US - A - 3 886 654 (ELDRE COMPONENTS)<br><br>* colonne 1, lignes 24 à 39; colonne 3, ligne 1 à colonne 9, ligne 33; figures 5 à 8 *<br><br>-- | 1,3,7,<br>9 |
| | US - A - 3 264 403 (ERDLE)<br><br>* colonne 1, ligne 71 à colonne 3, ligne 44; figures 1 à 5 *<br><br>-- | 1,4,7,<br>10 |
| | DE - A - 2 002 928 (B.B.C.)<br><br>* page 2, alinéa 4 à page 4; figures 1 à 3 *<br><br>-- | 1,7 |
| | FR - A - 866 785 (LE MAT. TELEPH.)<br><br>* page 1, ligne 30 à page 2, ligne 64; figure 1 *<br><br>-- | 1,3,5<br>-7 |
| | DE - B - 1 515 453 (B.B.C.)<br><br>* colonne 4, lignes 7 à 25; figures 1,2 *<br><br>-- | 1,5-7<br>10 |
| | | ./. |

**DOCUMENTS CONSIDERES COMME PERTINENTS**

**CLASSEMENT DE LA DEMANDE (Int. Cl. 3)**

H 01 B 7/08
H 02 G 5/00

**DOMAINES TECHNIQUES RECHERCHES (Int. Cl. 3)**

H 01 B  7/08
H 02 G  5/00
H 01 B 13/10
           7/00

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 25-01-1982 | DEMOLDER |

OEB Form 1503.1  06.78

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| | US - A - 3 708 609 (ROGERS)<br><br>* colonne 3, ligne 20 à colonne 5, ligne 60; figures 3 à 6 * | 1,3,4 7,8 | |
| | | | **DOMAINES TECHNIQUES RECHERCHES (Int. Cl. 3)** |

**Office européen des brevets**

**OEB Form 1503.2  06.78**